Europäisches Patentamt

European Patent Office

Office européen des brevets

(11) Publication number: **0 049 657**
**B1**

## (12) EUROPEAN PATENT SPECIFICATION

(45) Date of publication of patent specification: **29.05.85**

(21) Application number: **81401498.1**

(22) Date of filing: **28.09.81**

(51) Int. Cl.⁴: **B 60 T 11/26**

(54) Master cylinder and plastics reservoir combination.

(30) Priority: **03.10.80 US 193764**

(43) Date of publication of application:
**14.04.82 Bulletin 82/15**

(45) Publication of the grant of the patent:
**29.05.85 Bulletin 85/22**

(84) Designated Contracting States:
**DE FR GB IT**

(56) References cited:
**DE-A-2 817 885**
**FR-A-1 194 139**

(73) Proprietor: **THE BENDIX CORPORATION**
**Executive Offices Bendix Center**
**Southfield Michigan 48037 (US)**

(72) Inventor: **Gaiser, Robert Frank**
**5843 Ponderosa Drive**
**Stevensville Michigan 49127 (US)**

(74) Representative: **Brullé, Jean et al**
**Service Brevets Bendix 44, rue François 1er**
**F-75008 Paris (FR)**

Courier Press, Leamington Spa, England.

## Description

The invention relates to a master cylinder in a brake system. The master cylinder includes a reservoir for storing fluid and a housing bore which receives a pair of pistons. During a brake application the pair of pistons pressurize fluid trapped within the housing bore to communicate fluid pressure to a set of brake assemblies.

When the housing is made from a metal and the reservoir is made from a plastics material, the reservoir includes a pair of bosses which are received in respective housing openings and a pair of specially designed rubber grommets are carried by the reservoir or housing to seal the fluid communication established between the reservoir and housing. With the rubber grommet carried by the metal housing, the metal housing requires machining to provide a recess for receiving the rubber grommet. Also, the rubber grommet is carried by the housing to sealingly engage the vertically extending bosses. Because of the vertical dimension required by the rubber grommet, the resulting connection between the plastics reservoir and the metal housing adds to the overall height of the master cylinder.

A previously proposed example of a master cylinder and plastics reservoir combination is given in DE—A1—2,817,885. This document discloses a master cylinder on which a plastics reservoir is mounted by means of two depending plastics bosses which are received in corresponding openings in the master cylinder. This device has the disadvantage that the reservoir was secured to the master cylinder by means of screws which necessitated extra parts and fittings as well as extra machining of the master cylinder.

The present invention proposes a master cylinder and plastics reservoir combination wherein said master cylinder comprises a housing movably supporting a pair of pistons, the pair of pistons cooperating with the housing to substantially define a pair of pressure chambers, the housing defining a pair of openings leading to the pair of pressure chambers, a plastics reservoir substantially defining a pair of cavities which communicate fluid stored in the plastics reservoir to respective pressure chambers via a pair of ports defined by the plastics reservoir, and sealing means between the plastics reservoir and the housing to substantially prevent leakage from the communication of fluid between the pair of cavities and the pair of pressure chambers, said plastics reservoir including at least one integrally formed boss extending into one of said housing openings, said one boss cooperating with said housing to substantially define a groove for receiving said sealing means, characterised in that, said sealing means comprises an O-ring sealing ring, and in that said plastics reservoir also includes at least one tab extending outwardly in the same direction as said one boss, said one tab releasably engaging said housing to retain said one boss within said one opening thereby maintaining said O-ring sealing engagement with said plastics reservoir and said housing.

The present invention relates to an improvement in the connection between a plastics reservoir and a metal housing in a master cylinder. In particular, the plastics reservoir is provided with a pair of integrally formed tabs and the metal housing is provided with a support portion mounting the plastics reservoir and releasably connecting with the pair of tabs. The support portion includes a pair of slots for receiving respective tabs and the walls of the slots are engageable with the tabs to locate a boss on the plastics reservoir within an opening on the metal housing. The opening defines a stepped bore and the boss cooperates with the wall of the stepped bore to substantially define an annular groove for receiving an O-ring seal. A bottom outer wall of the plastics reservoir is engageable with the support portion which extends transversely from a cylindrical portion of the housing to engage a substantial width of the plastics reservoir bottom wall. In order to prevent disconnection of the pair of tabs from the support portion of the housing, the plastics reservoir further includes one or more integrally formed ridges on the inside of the plastics reservoir substantially opposite the pair of tabs. Movement of the tabs to a release position requires slight deformation of the ridges, and the rigidity of the ridges opposes movement of the pair of tabs to their release position.

Advantages gained from the invention are a reduction in the overall height of the master cylinder assembly, a reduction in cost as evidenced by the applicability of an O-ring seal rather than a specially designed grommet, and the elimination of machining operations for the metal housing.

One way of carrying out the invention is described in detail in the following text with reference to the drawings.

Figure 1 is a longitudinal side view of a master cylinder assembly, partly in cross section, constructed in accordance with the invention;

Figure 2 is a cross sectional view taken along line 2—2 of Figure 1;

Figure 3 is a cross sectional view taken along line 3—3 of Figure 1; and

Figure 4 is an exploded view of the cross sectional view of Figure 2.

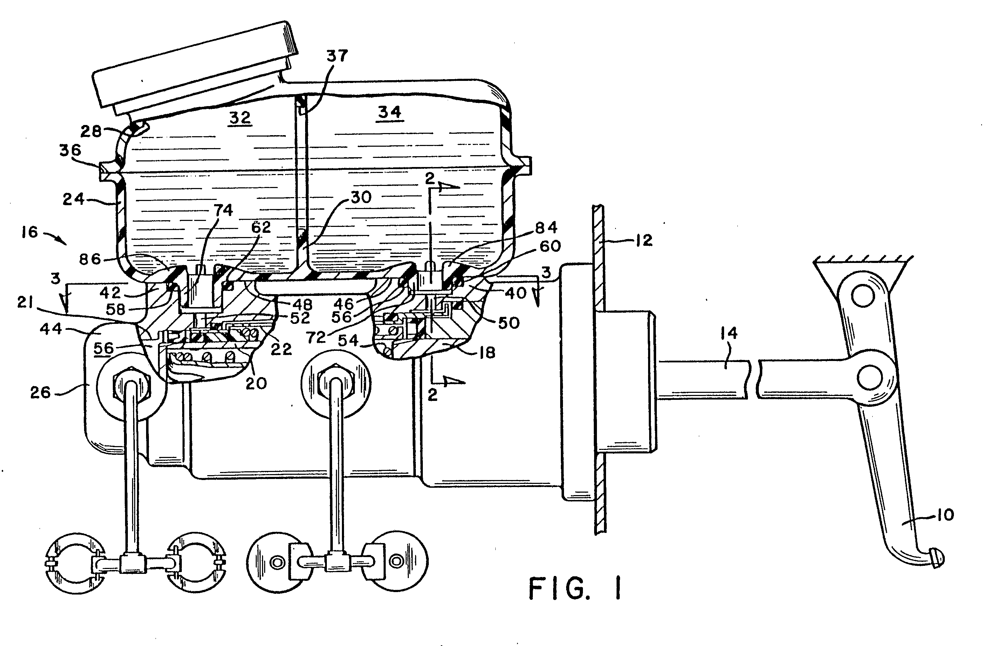

In the brake system illustrated in Figure 1, a brake pedal 10 is pivotally secured to a portion of a vehicle frame 12 to control movement of an input rod 14. A master cylinder 16 is also secured to the frame 12, albeit a different portion, and the input rod 14 extends into the master cylinder to control movement of a pair of pistons 18 and 20 within a bore 22 of the master cylinder.

The master cylinder 16 comprises a plastics reservoir 24 and a metal housing 26. The reservoir 24 includes a fill opening 28 for receiving brake fluid. An inner wall 30 separates the inside of the reservoir into a pair of cavities 32 and 34 and a slot 37 on the inner wall 30 permits communication of fluid from cavity 32 to cavity 34 so long as the fluid level is above a predetermined height. Preferably, the reservoir 24 is formed from a top plastics part defining the fill opening 28 and a bottom plastics part cooperating with the housing in a manner described hereinafter. The parts are joined via suitable means at the interface 36.

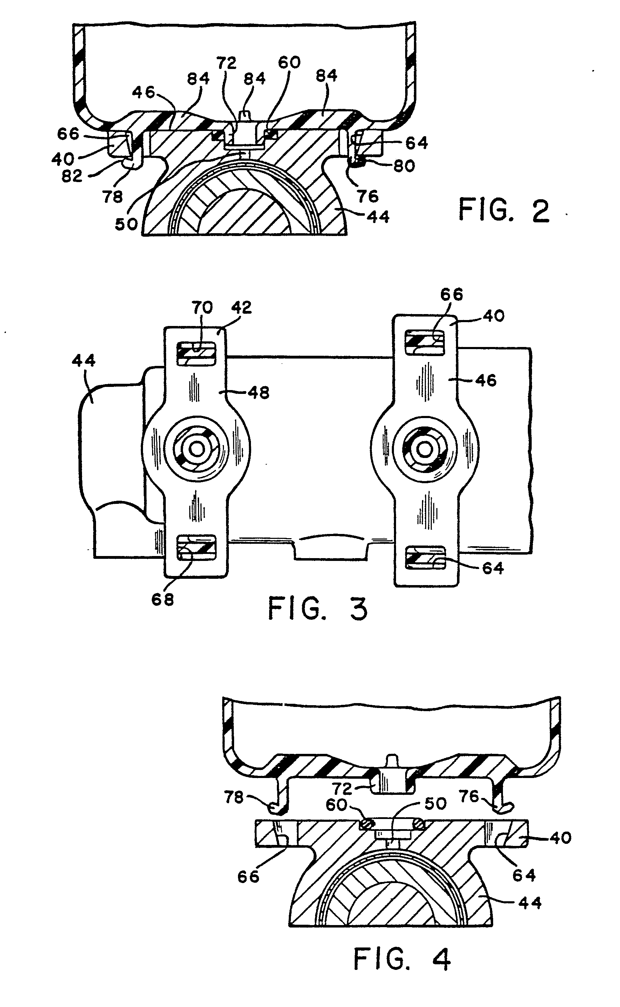

The housing 26 is made from a metal, such as aluminium, which can be die cast to form the bore 22. As shown in Figure 3, the housing is also formed with a pair of transversely extending support portions 40 and 42 which define transverse lengths larger than a cylindrical portion 44 of the housing. The portions 40 and 42 are intersected by respective stepped bores 50 and 52 leading from the bore 22. The piston 18 cooperates with the bore 22 to substantially form a primary pressure chamber 54 communicating with bore 50 in the rest position illustrated, while the piston 20 cooperates with a reduced portion 21 of the bore 22 to substantially form a secondary pressure chamber 56 communicating with the bore 52 in the rest position illustrated. Each housing bore 50 and 52 is stepped to define a respective groove 56 and 58 adjoining the flat surface 46 and 48. O-ring seals 60 and 62 are disposed within the respective grooves 56 and 58.

In order to connect the reservoir with the housing, the transversely extending portions 40 and 42 are provided with slots 64, 66 and 68, 70. The outer walls of each slot are tapered inwardly from top to bottom for a purpose to be described hereinafter. The plastics reservoir includes integrally formed bosses 72 and 74 and integrally formed tabs 76 and 78 associated with boss 72. The tabs associated with boss 74 are not shown, however these tabs are similar in structure and function to the tabs 76 and 78, so that the following description is equally applicable to the tabs associated with boss 74. Turning to Figure 2, the tab 76 extends through the slot 64 and a hook 80 at the end of tabs 76 is engageable with the bottom surface of the support portion 40 to lock the tab 76 to the support portion 40. Similarly, the tab 78 is engageable with the bottom surface of the support portion 40. From Figure 2 it is seen that the support portion 40 is wider than the width defined between the tabs 76 and 78. When the tabs 76 and 78 are disposed within the slots 64 and 66, the boss 72 is disposed within the opening 50. Also, the bottom surface of the reservoir is engaged with the flat surface 46 of the support portion and also sealingly engaged with the O-ring seal 60.

Prior to assembly of the reservoir and housing as shown in Figure 4, the tabs 76 and 78 are engageable with the tapered walls of the slots 64 and 66 before the boss 72 is disposed within the stepped bore 50. Forcing the reservoir toward the housing causes the tabs to move into the slots thereby deflecting the tabs inwardly. The engagement between the tabs and the walls of the slots causes the boss 72 to align with the bore 50. Once the hooks extend from the slots on the bottom side of the support portion 40, the tabs spring outwardly to engage the hooks 80 and 82 with the bottom side of the support portion 40.

Due to the inherent rigidity of the plastics tabs, the tabs will remain in the position illustrated in Figure 2. In order to further insure that the tabs will remain in this attached position, the reservoir includes a plurality of ridges 84 extending from the inside of the reservoir adjacent the boss 72 and another plurality of ridges 86 extending from the inside of the reservoir adjacent the boss 74. The ridges add to the rigidity of the reservoir at the location of the bosses 72 and 74 and also at the location of the tabs. Consequently, the tabs will not freely contract inwardly to permit unwanted separation of the reservoir from the housing. And if during repair the tabs are forced inwardly to separate the reservoir from the housing, the ridges will strengthen the portion of the housing at the bosses and tabs to enable repeated connection and disconnection of the reservoir and housing within damage or distortion of the reservoir.

In conclusion, the support portions 40 and 42 are maintained in engagement with a substantial width of the bottom wall of the reservoir when the tabs are hooked to the support portion. Consequently, movement of the reservoir relative to the housing is eliminated. Therefore, the O-ring seals 60 and 62 are maintained in a static loaded condition. The O-ring seals could be statically loaded in a vertical direction, so that the horizontal width of grooves 56 and 58 is greater than the horizontal width defined by each O-ring seal, whereas the vertical depth of each groove 56 and 58 is less than the vertical thickness of each O-ring seal. In the alternative, the O-ring seals could also be statically loaded in a horizontal direction.

**Claims**

1. A master cylinder and plastics reservoir combination wherein said master cylinder comprises a housing (26) movably supporting a pair of pistons (18, 20), the pair of pistons (18, 20) cooperating with the housing to substantially define a pair of pressure chambers, the housing defining a pair of openings (50, 52) leading to the pair of pressure chambers, a plastics reservoir (24) substantially defining a pair of cavities (32, 34) which communicate fluid stored in the plastics reservoir to respective pressure chambers via a pair of ports defined by the plastics reservoir, and sealing means (60, 62) between the plastics reservoir (24) and the housing (26) to substantially prevent leakage from fluid communication between the pair of cavities (32, 34) and the pair of pressure chambers, said plastics reservoir (24) including at least one integrally formed boss (72) extending into one of said housing openings (50), said one boss (72) cooperating with said housing to substantially define a groove (56) for receiving said sealing means (60), characterised in that, said sealing means comprises an O-ring sealing ring, and in that said plastics reservoir also includes at least one tab (76) extending outwardly in the same direction as said one boss, said one tab (76) releasably engaging said housing (26) to retain said one boss (72) within said one opening (50), thereby maintaining said O-ring sealing ring in sealing engagement with said plastics reservoir (24) and said housing (26).

2. A combination according to claim 1 characterized in that said one tab (76) cooperates with said housing during attachment of said plastics reservoir to said housing to substantially align said one boss (72) with said one housing opening (50).

3. A combination according to claim 2 characterized in that said housing (26) includes a cylindrical portion (44) movably receiving the pair of pistons and a support portion (40) cooperating with said plastics reservoir, said support portion (40) including at least one transversely extending flange defining an aperture (64) for receiving said one tab (76).

4. A combination according to claim 3 characterized in that said support portion (40) comprises a pair of transversely extending flanges engageable with said plastics reservoir (24), said flanges mounting said plastics reservoir relative to said housing cylindrical portion (44), and said flanges including a pair of slots (64, 66) to receive a pair of tabs (76, 78) extending outwardly from said plastics reservoir (24).

5. A combination according to claim 3 characterized in that said plastics reservoir includes at least one ridge (84) being substantially opposite said one tab (76) and cooperating with said plastics reservoir to oppose separation of said one tab (76) from said one transversely extending flange (40).

6. A combination according to claim 5 characterized in that said one ridge (84) cooperates with said plastics reservoir (24) to oppose withdrawal of said one integrally formed boss (72) from said one housing opening (50) so long as said one tab (76) remains in engagement with said one transversely extending flange (40).

**Patentansprüche**

1. Verbindung von Hauptzylinder und Plastikvorratsbehälter, bei der der Hauptzylinder ein Gehäuse (26) umfaßt, das ein Paar von Kolben (18, 20) beweglich lagert, wobei das Paar von Kolben (18, 20) mit dem Gehäuse zusammenwirkt und im wesentlichen ein Paar von Druckkammern bildet, das Gehäuse ein Paar von Öffnungen (50, 52) aufweist, die zu dem Paar Druckkammern führen, ein Plastikvorratsbehälter (24) im wesentlichen ein Paar von Hohlräumen (32, 34) aufweist, die das im Plastikvorratsbehälter gespeicherte Strömungsmittel über ein Paar von im Plastikvorratsbehälter ausgebildete Öffnungen entsprechenden Druckkammern zuführen, und zwischen dem Plastikvorratsbehälter (24) und dem Gehäuse (26) angeordnete Dichtungseinrichtungen (60, 62), die im wesentlichen ein Lecken der Strömungsmittelverbindung zwischen dem Paar der Hohlräume (32, 34) und dem Paar Druckkammern verhindern, wobei der Plastikvorratsbehälter (24) mindestens einen damit einstückig ausgebildeten runden Vorsprung (72) aufweist, der sich in eine der Gehäuseöffnungen (50) erstreckt und mit dem Gehäuse zusammenwirkt, so daß eine Nut (56) zur Aufnahme der Dichtungseinrichtungen (60) gebildet wird, dadurch gekennzeichnet, daß die Dichtungseinrichtungen einen O-Dichtungsring umfassen und daß der Plastikvorratsbehälter ferner mindestens einen Lappen (76), der sich in der gleichen Richtung wie der runde Vorsprung nach außen erstreckt und lösbar mit dem Gehäuse (26) in Eingriff steht, um den runden Vorsprung (72) innerhalb der einen Öffnung (50) zu haltern und dadurch den O-Dichtungsring in Dichtungseingriff mit dem Plastikvorratsbehälter (24) und dem Gehäuse (26) zu halten, aufweist.

2. Verbindung nach Anspruch 1, dadurch gekennzeichnet, daß der eine Lappen (76) während der Befestigung des Plastikvorratsbehälters am Gehäuse mit dem Gehäuse zusammenwirkt und den einen runden Vorsprung (72) mit der einen Gehäuseöffnung (50) im wesentlichen ausrichtet.

3. Verbindung nach Anspruch 2, dadurch gekennzeichnet, daß das Gehäuse (26) einen zylindrischen Abschnitt (44), der das Paar Kolben beweglich aufnimmt, und einen Lagerabschnitt (40) aufweist, der mit dem Plastikvorratsbehälter zusammenwirkt und mindestens einen quer verlaufenden Flansch aufweist, der eine Öffnung (64) zur Aufnahme des einen Lappens (76) bildet.

4. Verbindung nach Anspruch 3, dadurch gekennzeichnet, daß der Lagerabschnitt (40) ein Paar von quer verlaufenden Flanschen aufweist, die mit dem Plastikvorratsbehälter (24) in Eingriff bringbar sind und den Plastikvorratsbehälter relativ zu dem zylindrischen Abschnitt (44) des Gehäuse lagern, und daß die Flansche ein Paar von Schlitzen (64, 66) zur Aufnahme eines Paares von Lappen (76, 78), die sich vom Plastikvorratsbehälter (24) nach außen erstrecken, aufweist.

5. Verbindung nach Anspruch 3, dadurch gekennzeichnet, daß der Plastikvorratsbehälter mindestens eine Rippe (84) aufweist, die dem einen Lappen (76) im wesentlichen gegenüberliegt und mit dem Plastikvorratsbehälter zusammenwirkt, um einer Trennung des einen Lappens (76) von dem einen quer verlaufenden Flansch (40) entgegenzuwirken.

6. Verbindung nach Anspruch 5, dadurch gekennzeichnet, daß die eine Rippe (84) mit dem Plastikvorratsbehälter (24) zusammenwirkt und einem Rückzug des einen einstückig ausgebildeten runden Vorsprungs (72) von der einen Gehäuseöffnung (50) verhindert, solange wie der eine Lappen (76) in Eingriff mit dem einen quer verlaufenden Flansch (40) verbleibt.

**Revendications**

1. Une combinaison maître-cylindre et réservoir en matière plastique dans laquelle ledit maître-cylindre comprend un corps (26) portant de manière mobile une paire de pistons (18, 20), la paire de pistons (18, 20) coopérant avec le corps pour délimiter sensiblement une paire de chambres de pression, le corps comportant une paire d'ouvertures (50, 52) débouchant dans la paire de chambres de pression, un réservoir (24) en matière plastique délimitant sensiblement une paire de cavités (32, 34) qui transmettent le fluide emmagasiné dans le réservoir en matière plastique aux chambres de pression respectives par l'intermédiaire d'une paire d'orifices formés dans le réservoir en matière plastique et des moyens d'étanchéité (60, 62) entre le réservoir (24) en matière plastique et le corps (26) pour empêcher sensiblement les fuites à partir du passage de communication fluidique entre la paire de cavités et la paire de chambres de pression, ledit réservoir (24) en matière plastique comprenant au moins une protubérance (72) venue de matière qui pénètre dans l'une desdites ouvertures (50) du corps, ladite protubérance (72) coopérant avec ledit corps pour délimiter sensiblement une gorge (56) pour recevoir lesdits moyens d'étanchéité (60), caractérisée en ce que lesdits moyens d'étanchéité comprennent une bague d'étanchéité torique et en ce que ledit réservoir en matière plastique comporte également au moins une patte (76) s'étendant vers l'extérieur dans la même direction que ladite protubérance, ladite patte (76) étant accrochée de manière démontable audit corps (26) pour retenir. ladite protubérance (72) à l'intérieur de ladite ouverture (50) de façon ainsi à maintenir ledit appui d'étanchéité de la bague torique contre ledit réservoir (24) en matière plastique et contre ledit corps (26).

2. Une combinaison selon la revendication 1, caractérisée en ce que ladite patte (76) coopère avec ledit corps au cours de la fixation dudit réservoir en maière plastique sur ledit corps pour aligner sensiblement ladite protubérance (72) avec ladite ouverture (50) du corps.

3. Une combinaison selon la revendication 2, caractérisée en ce que ledit corps (26) comporte une partie cylindrique (44) qui reçoit de manière mobile la paire de pistons et une partie support (40) qui coopère avec ledit réservoir en matière plastique, ladite partie support comprenant au moins un rebord s'étendant transversalement comprenant une ouverture (64) pour recevoir ladite patte (76).

4. Une combinaison selon la revendication 3, caractérisée en ce que ladite partie support (40) comporte une paire de rebords s'étendant transversalement susceptibles de venir en appui contre ledit réservoir en matière plastique, lesdits rebords portant ledit réservoir en matière plastique par rapport à ladite partie de corps cylindrique et lesdits rebords comportant une paire de fentes (64, 66) pour recevoir une paire de pattes (76, 78) qui s'étendent vers l'extérieur à partir dudit réservoir (24) en matière plastique.

5. Une combinaison selon la revendication 3, caractérisée en ce que ledit réservoir comporte au moins une nervure (84) disposée sensiblement à l'opposé de ladite patte (76) et qui coopère avec ledit réservoir en matière plastique pour s'opposer à la séparation de ladite patte (76) dudit rebord (40) s'étendant transversalement.

6. Une combinaison selon la revendication 5, caractérisée en ce que ladite nervure (84) coopère avec ledit réservoir (24) en matière plastique pour s'opposer au retrait de ladite protubérance (72) venue de matière hors de ladite ouverture (50) du corps tant que ladite patte (76) reste accrochée audit rebord (40) s'étendant transversalement.

FIG. I

FIG. 2

FIG. 3

FIG. 4